# EUROPEAN PATENT SPECIFICATION

(11) **EP 0 987 948 B1**
(45) Date of publication and mention of the grant of the patent: **02.01.2003**
(21) Application number: 98923048.7
(22) Date of filing: 14.05.1998
(51) Int. Cl.: A21B 3/07, A21B 1/42, B65G 17/12

(54) **MODULAR SYSTEM FOR CONVEYING BAKERY PRODUCTS, AND OVEN PROVIDED WITH SAID MODULAR SYSTEM**
MODULARES SYSTEM ZUM FÖRDERN VON BACKGUT, UND OVEN MIT EINEM SOLCHEN MODULAREN SYSTEM
SYSTEME MODULAIRE POUR LE TRANSPORT DE PRODUITS DE BOULANGERIE, ET FOUR POURVU D'UN TEL SYSTEME MODULAIRE

(30) Priority: 23.05.1997 IT VR970044; 02.12.1997 IT VR970114
(43) Date of publication of application: 29.03.2000
(73) Proprietor: Orlandi Eng. S.R.L., 37026 Settimo di Pescantina (IT)
(72) Inventor: ORLANDI, Andrea, I-37122 Verona (IT)
(74) Representative: Petraz, Gilberto Luigi
(86) International application number: IT9800122
(87) International publication number: WO98052419

(56) References cited:
- AT-B- 376 106
- FR-A- 1 073 689
- GB-A- 385 125
- GB-A- 796 025
- US-A- 2 900 927
- US-A- 3 395 653
- US-A- 4 346 803
- US-A- 4 882 981

## Description

### TECHNICAL FIELD

The present invention relates to a modular system for conveying bakery products, which need to pass through different chambers during their processing, as well as to stay inside of said chambers for suitable periods of time during their production and/or working phases.

In particular, the present invention relates to conveying system constituted by carriages, in the following defined as "cradles", which are removably fixed to a conveying chain, said conveying system being particularly flexible and suitable to meet the baking requirements of very different products.

More particularly, the present invention is applied to the field of conveying bakery products, e.g. bread, buns, pizzas, biscuits, pies and the like, inside of suitable chambers in which said products may stay for predetermined periods of time, during which many different production and/or working operations are generally carried out.

A further object of the present invention is the realization of an oven for bakery products, said oven being provided with the conveying system cited above, which allows to continuously and automatically operate said oven.

The present invention is principally applied to foodstuffs industries.

### BACKGROUND ART

Conveying systems comprising conveyor belts for conveying different products during the various phases of their production processes are frequently used.

In particular, in foodstuffs industries, some specific operations, such as leavening, baking, cooling, deep-freezing, require that a given product should stay inside of suitable chambers, e.g. fermentation cells or ovens, for a predetermined period of time, said period of time varying according to the kind of product to be processed.

Thus, suitable chambers provided with a conveyor belt conveying system in which the product is directly loaded on the cradles or positioned in suitable trays, are well known in the art.

Generally, said conveyor belt follows a zig-zag path, the length of which varies on the base of specific needs of a given product.

Besides, according to said system the cradles are permanently fixed to the conveying chain.

However, it appears to be evident that such a system develops in the horizontal direction and, consequently, a lot of space is needed; furthermore, said system is generally rather complex from a constructional point of view since the conveying system inside of the chamber has a very complicated design.

Besides, since the cradles are fixed to the chain which drives them inside of each chamber, this technical solution is rigidly dependent on the distance (or "pitch") between two successive cradles, said distance or pitch remaining unchanged and unmodifiable along the whole plant development.

This aspect considerably limits the plant capacity, since it has very little flexibility in respect of any operation needs occuring during production and/or working cycles of the product.

Furthermore, technical solutions are also known in the art, according to which the products are placed on trays which are stacked on one another by means of suitable, automatically or manually operated stackers, and then they are moved through different chambers where the different working phases are carried out.

However, such a system involves a plurality of drawbacks, e.g. the precarious stability of the trays stacked on one another and the subsequent need of suitable joints and supporting structures to allow the vertical displacement of said stacked trays.

A further disadvantage is constituted by the difficulty or even the impossibility to stack products having very different heights, what once again remarkably limits the plant versatility.

According to a further known solution, the products are firstly loaded on trays, properly shaped according to the dimensions of any specific product, and then they are moved, by means of said trays, along vertical ascending and descending paths within adjacent chambers during the different phases of the working cycle.

However, this system operates on each single tray which is positioned on suitable supports that enable the ascending and sunsequent descending movement of the trays inside of a given chamber, e.g. inside of an oven, a leavening cell, etc..

Tunnel type ovens bakery products, in which the products to be processed are positioned on trays that are moved by means of suitable conveyor belts which follow long and articulated paths, are well known in the art.

Besides, static or rotary hearth furnaces for bakery products, characterized by a working chamber in which the hot air necessary to the baking is suitably distributed in order to realize an advantageous turbulence, are also well known.

Inside of said working chamber there is a circular platform upon which the carriages are loaded which support the trays where are the products to be baked.

After the loading phase, the baking is started by means of hot air till the end of the process when the carriages are manually discharged and the oven is ready for a new working cycle.

A drawback of said rotary furnaces is represented by the loading and unloading phases of the carriages upon and from the platform, said phases being manually operated.

Thus, this implies the impossibility to realize a continuous and completely automatic cycle, the working phases having to be stopped to allow the loading of the platform with the products to be baked and to allow the discharge of said products at the end of the baking cycle.

It is apparent that, considering the process economy, said technical solution implies very long dead times due to the carriage loading and unloading operation, and it also requires specialized staff for moving said carriages.

A further disadvantage of said technical solution is the position of the trays which support the products to be baked, said trays being arranged in different layers on each carriage and then subjected to the hot air flow during the baking phase.

Said particular configuration of the trays prevents that a suitable heat amount, at a predetermined temperature and for a predetermined period of time, reaches the bottom of each tray, what would be particularly advantageous in order to obtain a crisp crust at the products base, especially in the case of bread production.

A further drawback of said rotary furnaces is the impossibility to carry out an effective damping phase of the product before its baking.

### DESCRIPTION OF THE INVENTION

The present invention aims to set aside the disadvantages and drawbacks which are typical of the background art and to provide for a functional, economical and easy to operate, cradle-based conveying system for bakery products inside of suitable chambers.

This is obtained by means of a system having the features disclosed in claim 1.

The dependent claims describe particularly advantageous forms of embodiment of the system according to the present invention.

Furthermore, the present invention aims to obtain a new type of oven provided with said cradle-based conveying system, said oven being completely automatized, having a little bulk and presenting different working areas according to the specific production needs of a given bakery product.

This is obtained by means of an oven having the features disclosed in claim 11.

The claims dependent on claim 11 describe particularly advantageous forms of embodiment of the oven according to the invention.

According to the present invention, a cradle constitutes the elementar module which is moved during the different phases of a production cycle and which is subjected to stay, if necessary, inside of specific units of said production cycle for predetermined periods of time.

Said cradle is constituted by a rectangularly shaped platform which has a supporting structure where the loose products or the trays containing said products are positioned.

Said platform can be made of metallic material or of any other material, e.g. wood, felt, nylon, according to the particular kind of product to be obtained or according to the particular operation the product has to be subjected to, e.g. leavening, baking, drying process, etc..

For instance, if large bread pieces have to be produced, said cradles are provided with suitable cloth or canvas bags which are able to contain bread pieces of suitable dimensions.

Irrespective of the kind of load to be conveyed, i.e. loose products or trays of any shape and dimension, each cradle has the essential feature to be removably constrained to the conveyor chain, i.e. it is not made integral to said chain as described above when referring to particular forms of embodiment of the prior art.

Said technical feature is particularly advantageous since it allows to modify the pitch between two subsequent cradles, what makes the plant very versatile and able to produce many different products, each of them having sometimes very different production requirements.

Furthermore, varying the pitch allows the cradles to be loaded with products of very different heights without causing any particular problem during the ascending and descending paths inside of the working chambers.

According to the present invention, each cradle is provided with one or more pairs of coupling flanges.

The presence of said flanges allows the cradle to be coupled to the traction chain which causes the horizontal translation movement of the cradle.

Furthermore, each cradle is provided with small wheels, advantageously at least four wheels, two on each side, what assures a stable advancing movement of the cradle.

In fact, said wheels are constrained to move on two pantograph guides which are parallel to the horizontal traction chain, thereby enhancing a correct and stable movement of the cradle during its displacement inside of the plant.

According to a form of embodiment of the present invention, each cradle is provided with a first pair of upper coupling flanges and with a second pair of lower coupling flanges, said first and second flange pairs acting separately for two different periods of time during the horizontal translation run as disclosed herein below.

At the end of the loading phase, the cradle carrying the products is horizontally moved by means of the lower coupling flanges which are mutually connected to pins suitably placed on the translation chain and separated by the same pitch as the cradles.

When the cradle is introduced into a working chamber, e.g. a vertical oven of the type described in details in the following of the present disclosure, said lower coupling flanges are released from the pins which they are engaged to.

Then the free cradle is lifted by means of a vertical kinematic motion which comprises sliding planes arranged on the chain of said kinematic motion, said planes being spaced of a predetermined pitch and having the function of supporting the wheels of the cradle.

Said ascending and descending movements are obtained by one or more vertical translation chains.

According to a form of embodiment of the present invention, at the end of the ascending phase and before the starting of the descending phase, a further horizontal translation chain can be provided, this translation path being obtained by means of a translation chain which is provided with pins separated by a predetermined pitch that is equal to the pitch between two adjacent cradles.

Thus, said pins are positioned to engage the upper coupling flanges of the cradle and this causes the cradle ascending movement inside of a given chamber.

At the end of the descending path, the cradle is placed on the horizontal translation chain by means of the lower coupling flanges and it is then ready to be introduced inside of a successive chamber to continue its production cycle.

According to specific working cycles to be carried out, the cradle is discharged, generally by means of suitable conveyor belts, and then, empty and still connected to the translation chain, it is brought to the starting point to be loaded again.

Said return path is carried out by the horizontal translation chain at the end of which there are gears which drive the cradle to the starting point.

Parallel to the translation chain path there are two pantograph guides, the ends of which are advantageously provided with gears that follow the cradle wheels.

In this way the cradle is able to rotate without turning upside down, thereby always maintaining a correct horizontal position.

According to a further form of embodiment of the present invention, the cradle is provided with only one coupling flange on each side parallel to the advancing direction, said coupling flange being positioned under the horizontal plane of the cradle.

According to this form of embodiment, said lower flange allows the horizontal translation movement of the cradle from one working and/or production chamber to an adjacent one thanks to the engagement of said flange to suitable pins positioned on the chain, in a similar way as described with reference to the previous form of embodiment.

Inside of each chamber, where a single phase of the working and/or production cycle is carried out, the horizontal translation path, that connects the ascending and descending paths of the cradles, is realized by another horizontal translation chain.

Since the cradle is in this case not provided with the upper coupling flanges, said cradle is moved by means of suitable brackets placed on the horizontal translation chain, said brackets advancing the cradle by using the wheels or the frame of the cradle as pushing surfaces.

In order to advantageously synchronize the cradle movements inside of the whole working and/or production cycle, it is necessary that said brackets are spaced by a predetermined pitch on the horizontal translation chain.

Besides, from a constructional point of view, many possible variants can be adopted to 'satisfy the specific needs of production and/or working plants, even very different from each other.

For instance, the conveying system according to the present invention allows to select the dimensions of the cradles in order to modify the capacity of each chamber so as to contain different numbers of cradles of predetermined sizes according to desired productivities.

According to a further form of embodiment of the present invention, said chambers can conveniently contain a plurality of stacks of cradles, said stacks being duly positioned side by side in respect of each other during their ascending and descending paths inside of said chamber.

In such a way, high productivities and different permanence times of the product inside of each chamber can be achieved.

Furthermore, said chambers can be open and/or close and/or suitably insulated according to the operations to be carried out, e.g. baking, fermentation, cooling, deep cooling, etc..

According to a further form of embodiment of the present invention, the vertical descending path of the cradles inside of a given chamber can exhibit a pitch different from the one of the ascending path.

In this case, the pitch of the descending path is a multiple or a fraction of the pitch of the ascending path so that the cradle always engages the horizontal translation chain according to a predetermined pitch.

This allows, if necessary, any manual operation to be directly carried out on the product, e.g. cutting or slicing the bread.

In fact, thanks to said different pitch, the cradle can be brought, by means of specific lifting devices, to a suitable height for a predetermined period of time so that any kind of operation can be carried out on the product supprted by the cradle.

According to a further form of embodiment of the present invention, the pantograph guides which follow the cradle during its horizontal translation movement can be replaced by suitable gears or devices having the function to give stability to the cradle.

### ILLUSTRATION OF THE DRAWINGS

Other features and advantages of the present invention will become apparent by reading the following description, given as a non-limiting example, with the help of the figures illustrated in the attached drawings, in which:
- figure 1 shows a schematic front view of a production unit and its respective conveying system according to a form of embodiment of the present invention;
- figure 2 shows a detail of the cradle system of figure 1;
- figure 3 represents a schematic view of the ascending path inside of a production unit according to the present invention;
- figures 4a and 4b shows respectively a side view and a plan view of a cradle according to the present invention;
- figure 5 shows a schematic front view of a production unit and its respective conveying system according to a further form of embodiment of the present invention, and
- figure 6 shows a schematic side view of an oven for bakery products provided with the conveying system shown in the according to the invention.

### DESCRIPTION OF A FORM OF EMBODIMENT

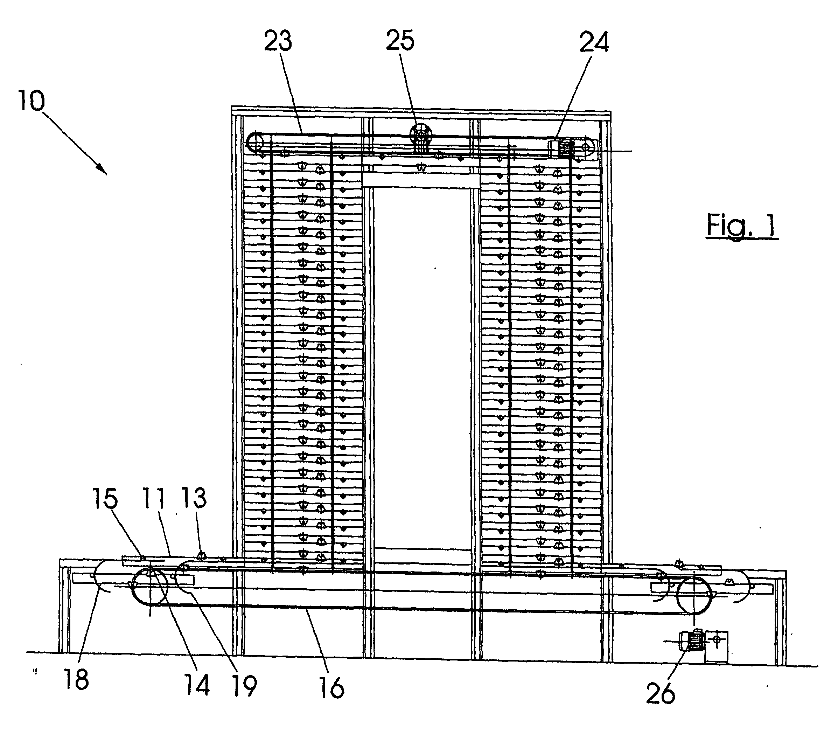

In figures 1 to 5, reference sign 10 indicates a modular system for conveying bakery products which pass through distinct chambers where they stay for predetermined periods of time during their production and/or working cycle.

Figure 1 shows a particular unit of the modular system according to the present invention, said unit being repeated in the production plant according to the operative needs which are typical of a given product.

Said unit of the modular system is obtained by the combination of a horizontal translation path, which allows a cradle to be moved from one unit to the subsequent one, with an ascending/descending path made by the cradle inside of each production and/or working chamber.

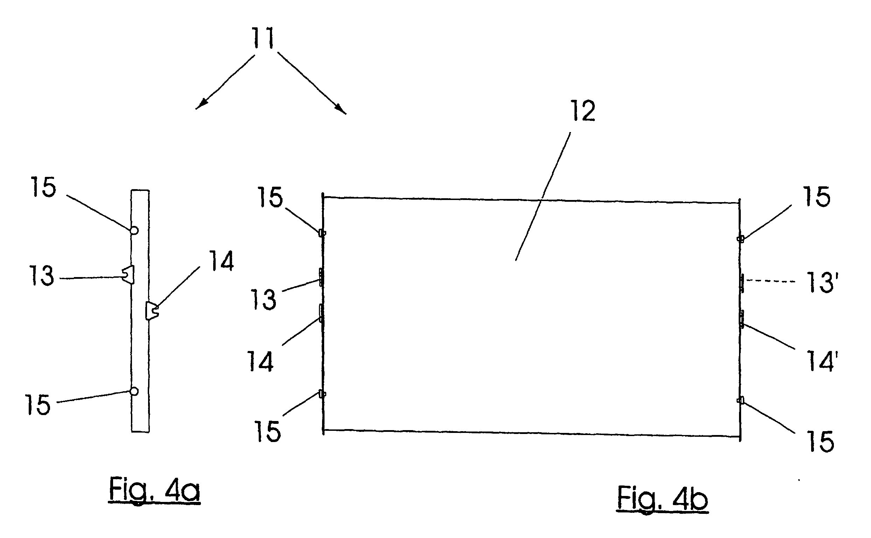

Cradle 11 (see figures 4a and 4b) is constituted by a rectangularly shaped platform 12 having a supporting structure on which the loose products and/or the trays supporting said products are located.

Said cradle is provided with a first pair of upper coupling flanges 13, 13' and with a second pair of lower coupling flanges 14, 14' which are respectively positioned on each side of the platform, parallel to the advancing direction of the cradle.

Thanks to the lower coupling flanges 14, 14' the cradle is removably fixed to the horizontal translation chain which performs the horizontal movement between the production units of the plant, as disclosed hereinafter.

Besides, according to a form of embodiment of the present invention, the cradle is provided with four small wheels 15 at the ends of its platform, said wheels allowing a stable advancing movement of the cradle.

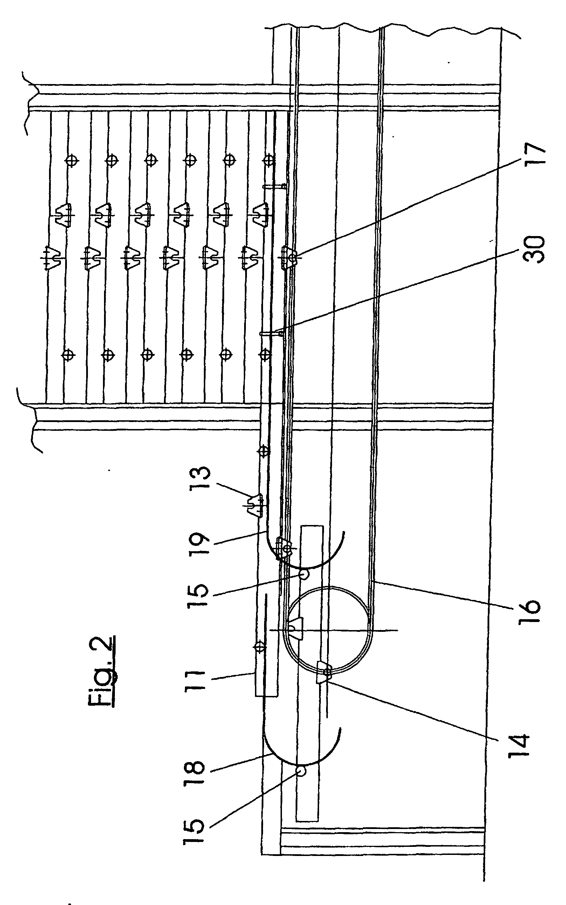

A pair of horizontal translation chains (of which only chain 16 is shown in figure 2) is provided with a pair of pins 17, separated by a pitch which is equal to the cradle pitch.

The lower coupling flanges 14, 14' of each cradle are fixed to said pins 17, thereby assuring the horizontal translation of the cradle.

Wheels 15 are constrained to move on two pantograph guides 18, 19 which are parallel to horizontal translation chain 16 and are placed at each side of said guides on planes that are different from the chains planes.

Said pantograph guides 18 have the function to aid the advancing movement of cradle 11 conferring a correct stability to the latter during its run inside of the plant.

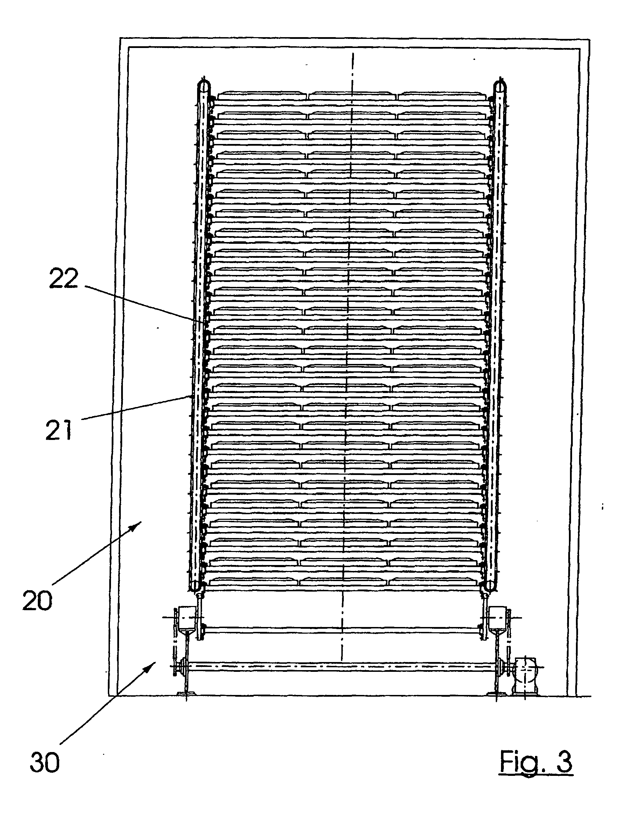

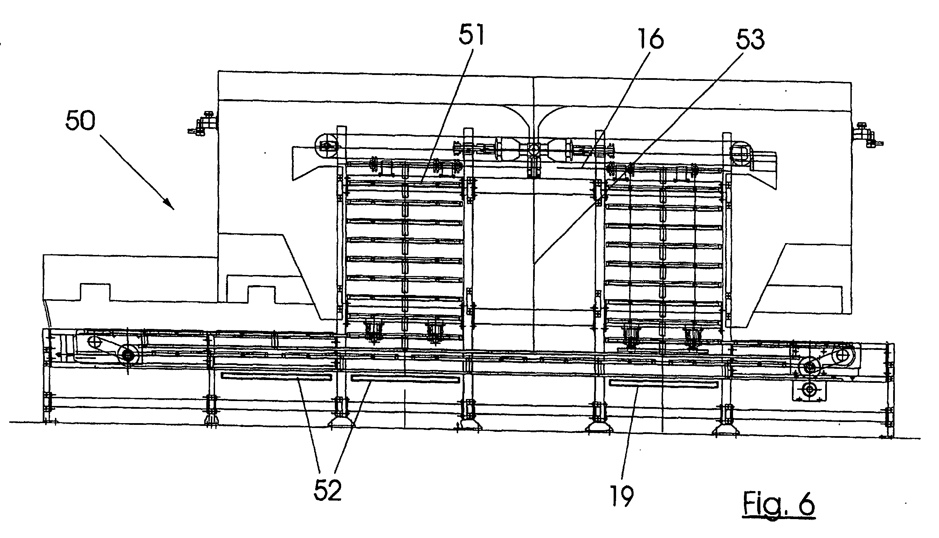

The introduction of cradle 11 into a production unit 10, e.g. an oven 50 (see figure 6) which is described in details in the following of the present disclosure, is due to a vertical kinematic motion 20 (see figure 3) which lifts the cradle.

In such a way lower coupling flanges 14, 14' are disengaged from pins 17 of horinzontal translation chains 16 thanks to a cam device which is indicated with reference sign 30 in figure 3.

Hooks or brackets 21, spaced by a predetermined pitch, are positioned on chain 22 of said vertical kinematic motion; said hooks or brackets 21 lift cradle 11 by contacting cradle wheels 15 and perform the ascending and descending movement of the same inside of each production and/or working chamber.

The passage from the ascending phase to the descending phase is realized by a pair of horizontal translation chains 23 (see figure 1) which are provided with pins spaced at a predetermined pitch, equal to the cradle pitch, said pins engaging upper coupling flanges 13, 13' of the cradle.

Besides, figure 1 shows motors 24, 25, 26 necessary for the functioning of cradle driving chains.

Referring to figure 1, hereinafter is disclosed a particular form of embodiment of the modular system according to the present invention.

Defining as "p" the distance between two subsequent pins 17 on the horizontal translation chain, said pins having the function to drag the cradles, and said distance having been previously defined as "pitch", and indicating as "t" the period of time each cradle needs to run over a distance p along said horizontal translation chains, an essential feature of the present invention is a coordinated and synchronized movement of the cradles along the horizontal and vertical paths inside of the plant.

In fact, defining as p₁ the pitch corresponding to the ascending and/or descending path inside of a production unit, i.e. the distance between two adjacent hooks or brackets 21, said pitch p₁ is selected in such a way as it is a multiple and/or a fraction of the pitch p relative to horizontal translation chains in order to realize the coordinated and synchronized movement cited above.

This is achieved by forcing the cradles to run the distances corresponding to pitches p and p₁ in the same period of time t even if they have different values.

A controlling electronic device is provided to synchronize translation motors 24, 25, 26 of chains 16, 22, 23, thereby assuring the coordination of each movement.

Pitch p₁ can be different from p and suitably selected in order to meet any specific technical requirement of the production and/or working cycle, e.g. the need to load on cradles 11 bakery products which have different heights, or the need to operate on them.

Furthermore, inside of the same production unit the ascending and descending paths may have different pitches. Moreover, suitable spaces can be provided between two subsequent production units in order to allow possible maintenance operations on the translation chain, and/or carrying out loading/unloading operations of the products to/from the cradles.

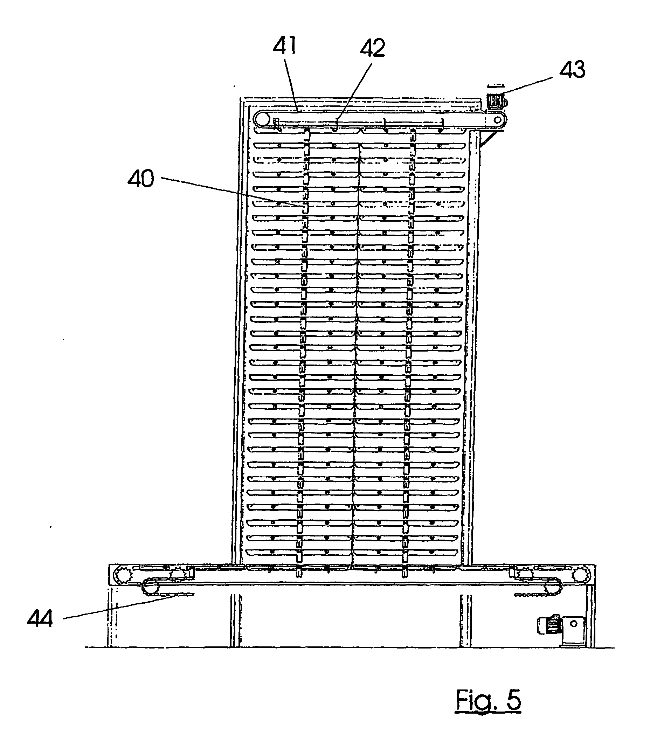

According to a further form of embodiment of the present invention shown in figure 5, the cradle is provided with one pair of lower coupling flanges 40 respectively positioned on the cradle sides parallel to the displacement direction.

Said lower coupling flanges 40 enable the horizontal translation movement of the cradle from one working and/or production chamber to another, whereby said flanges engage pins 17 of horizontal translation chain 16 (see figure 2).

Inside of each chamber the horizontal translation of each cradle between ascending and descending paths is obtained by a horizontal translation chain 41 which is driven by motor 43, said chain 41 being provided with brackets 42 which push the cradle by contacting its wheels or frame.

Besides, figure 5 shows a further form of embodiment of the present invention according to which pantograph guides 18, 19, which guide the cradle during its horizontal translation movement, are replaced by a mechanism provided with sprocket-wheels 44 which give stability to the cradle during its motion.

Reference sign 50 in figure 6 indicates an oven of the "tower" type, i.e. a vertical oven, usually used for bakery products; inside of said oven 50 there is a conveying system having an ascending/descending path according to the invention.

According to this particular form of embodiment of the invention, cradle 51 is either made of refractory material or it houses a slab made of stone or concrete or of any material able to enhance the baking of the product positioned on said slab.

Thus, in this way vertical oven 50 is completely automatized and sets aside the drawbacks of the background art, e.g. the large bulk which generally characterizes horizontal traditional ovens.

According to a particular form of embodiment of the present invention, cradle 51 is provided with four small wheels 52 positioned at the ends of the platform of said cradle, said wheels enabling a stable advancing movement of the cradle.

Figure 6 shows a horizontal translation path that cradle 51, containing the product to be processed, runs to get into the oven and out'of the latter, said horizontal translation path being combined with an ascending/descending path run by cradle 51 inside of oven 50 as described above with reference to the preceding figures (figures 1 to 5).

Moreover, oven 50 according to the invention is provided with heating elements 52 (in the figure in the number of three) which are advantageously positioned inside of oven 50 in suitable and predetermined areas of the latter.

Said heating elements 52 generate a predetermined amount of heat for a predetermined period of time according to the specific working needs.

Said amount of heat is concentrated on the bottom of cradles 51 in order to heat them up to a predetermined temperature when the product is, or is not, present on said cradles, according to specific baking requirements.

If the product is present, said amount of heat applied to the product results in the product bottom forming a crisp crust, which is particularly advantageous and wishful when the product is bread.

The heating elements 52 are positioned in such a way as each cradle 51, during its movement,is driven or placed in correspondence of said heating elements for a predetermined period of time.

Said period of time can be differently adjusted for each heating element according to its position inside of the oven and to the different baking phases of the product to be processed.

Heating elements 52 are generally heated by means of resistors, but it is evident that any heat generating device can be used.

Thus, oven 50 advantageously comprises a baking area and at least a humidification area in which the product is subjected to a steam flow which has the specific function to create a thin film on said product.

This considerably helps the successive baking phase and/or cooling phase of the product when the humidification area is positioned downstream of the baking phase.

According to a particular form of embodiment of the invention, the humidification or vaporization area is placed close to the first and/or second platform of the ascending path inside of the oven and said steam flow can be continuous or intermittent.

According to a further form of embodiment of the present invention, the baking area is advantageously divided into two distinct areas at different temperatures in order to adjust the amount of heat to be given to the product.

For instance, two baking areas at different temperatures are obtained by positioning a separation bulkhead 53 inside of oven 50 and providing a suitable system for allowing the passage of the cradles from one area to the other during the horizontal translation which connects ascending and descending paths.

Besides, oven 50 can be provided with a burner or with a pair of distinct burners, one for each baking area, with different ventilation systems.

In fact, oven 50 is advantageously of the forced convection type, the baking operation being realized by the convective motions of the hot air introduced inside of said oven, said convective motions being obtained by one or more fans, e.g. centrifugal fans.

According to a further form of embodiment of the invention, the horizontal translation path connecting two different ascending and descending areas can be omitted.

In this way only one thermal unit, constituted by a burner and a fan, is provided for.

## Claims

1. Modular system (10) for conveying different kind of bakery products inside of a working and/or production plant, said plant comprising at least an unit provided with a chain conveyor (16; 22; 23; 41) suitable to horizontally or vertically move a plurality of carriages or cradles (11; 51) by means of suitable motors (24; 25; 26; 43), said cradles (11; 51) being provided with pairs of wheels (15) constrained to move on guides (18; 19; 44) associated to the path of said motion chains, **characterized in that** said cradles (11; 51) are removably constrained to the horizontal translation chains (16; 23; 41) by means of coupling means (13; 14; 40) constrained to said cradles, **in that** said cradles (11; 51) are movably constrained to the vertical translation chains (22) by means of engaging means (21) acting on said wheels (15), and **in that** the respective horizontal and vertical translation movements are coordinated and synchronized.

2. Modular system (10) according to claim 1, **characterized in that** said coupling means (13; 14; 40) are constrained to pins (17) and/or brackets (42) positioned on said chain conveyors (16; 23; 41).

3. Modular system (10) according to claim 1, **characterized in that** said engaging means (21) are constituted by hooks or brackets positioned on said vertical translation chains (22).

4. Modular system (10) according to claim 2, **characterized in that** the distance or pitch (p) between two subsequent adjacent pins (17) and/or (16; 23; 41) has a predetermined value.

5. Modular system (10) according to claim 3, **characterized in that** the distance or pitch (p₁) between two engaging means (21) of the vertical conveyor (22) is equal to a multiple or to a fraction of the distance or pitch (p) between two subsequent pins (17) or brackets (42) of the horizontal conveyor (16; 23; 41).

6. Modular system (10) according to anyone of the preceding claims, **characterized in that** said guides are pantograph guides (18; 19) and are provided with suitable gears at the respective ends in order to enhance the rotation of the cradle wheels (11) during their return path to the starting point.

7. Modular system (10) according to anyone of the preceding claims, **characterized in that** each ascending and/or descending path comprises at least two adjacent stacks of cradles.

8. Modular system (10) according to anyone of the preceding claims, **characterized in that** each unit is open and/or close and/or insulated according to the operations occuring in said unit.

9. Modular system (10) according to anyone of the claims from 5 to 8, **characterized in that** the vertical descending path of the cradles inside of an unit has a pitch equal to a multiple or to a fraction of the pitch of the ascending path of the unit.

10. Modular system (10) according to anyone of the preceding claims, **characterized in that** it is provided with automatic or semi-automatic means for discharging the product from the cradle.

11. Tower type oven (50) for bakery products, comprising a modular system (10) for conveying said bakery products inside of of said oven according to anyone of the preceding claims, **characterized in that** said oven (50) comprises first heating and ventilation means (52) as well as second means (53) for subdividing the oven volume so that the baking area of said oven (50) comprises at least two distinct areas having different operation temperatures.

12. Oven (50) according to claim 11, **characterized in that** it comprises at least a humidification or vaporization area upstream and/or downstream of the baking area.

13. Oven (50) according to claim 12, **characterized in that** the vaporization area is positioned in correspondence of the first and/or second element of the ascending area provided inside of the oven (50).

14. Oven (50) according to anyone of the claims from 11 to 13, **characterized in that** the two areas at different temperatures are respectively the ascending and descending areas which are present inside of the oven (50).

15. Oven (50) according to anyone of the claims from 11 to 14, **characterized in that** each baking area having a different temperature comprises a burner and a fan system.

16. Oven (50) according to claim 11, **characterized in that** the internal subdividing means comprise a bulkhead (53) provided with an inlet allowing the horizontal translation of the elements (51) supporting the bakery products from the first to the second baking areas.

17. Oven (50) according to anyone of the claims from 11 to 16, **characterized in that** the ascending area is at a temperature higher than the temperature of the descending area.

18. Oven (50) according to anyone of the claims from 11 to 17, **characterized in that** it comprises additional heating elements (52) suitable to cooperate with the elements (51) supporting the bakery products.

19. Oven (50) according to claim 18, **characterized in that** said additional heating elements (52) are positioned upstream the baking area thereby carrying out a pre-baking phase of the product.

20. Oven (50) according to anyone of claims 18 or 19, **characterized in that** the heating elements (52) are heated at temperatures different from each other by using resistors, advantageously armored resistors.

21. Oven (50) according to claim 20, **characterized in that** it is provided with a thermal group constituted by a burner and a fan.

22. Oven (50) according to anyone of claims from 11 to 21, **characterized in that** the supporting elements (51) which contains baked products comprise a slab made of stone or any material, e.g. ceramic or concrete, to enhance the baking of said products.

## Patentansprüche

1. Modulsystem (10) für die Beförderung von verschiedenen Bäckereiprodukten innerhalb einer Anlage für die Bearbeitung und/oder Herstellung dieser Produkte, das mindenstens eine Einheit mit einem Kettenförderer (16; 22; 23; 41) enthält, die für die horizontale oder vertikale Verschiebung von Wagen oder beweglichen Plattformen (11; 51) durch passende Motoren (24; 25; 26; 43) sorgen. Diese beweglichen Plattformen (11; 51) sind mit Räderpaaren (15) versetzt, die gebunden sind, auf Führungen (18; 19; 44) zu gleiten und mit der Strecke der genannten Verschiebungsketten verbunden sind. Das System wird davon charakterisiert, daß die genannten beweglichen Plattformen (11; 51) auf abnehmbare Art an den Horizontalverschiebungsketten (16; 23; 41) durch Greifmittel (13; 14; 40), die an den beweglichen Plattformen gebunden sind und daß diese bewegliche Plattformen (11; 51) auf abnehmbare Art an den Vertikalverschiebungsketten (22) durch Greifmittel (21) gebunden sind, die auf den gennanten Rädern (15) wirken, und daß die entsprechenden Horizontal-und Vertikalverschiebungen auf koordinierte und synchronisierte Art erfolgen.

2. Modulsystem (10) laut Anspruch 1, davon charakterisiert, daß die oben gennanten Kupplungsmittel (13; 14; 40) an Zapfen (17) und/oder Bügeln (42) gebunden sind, die auf den genannten Kettenförderer (16; 23; 41) eingeordnet sind.

3. Modulsystem (10) laut Anspruch 1, davon charakterisiert, daß die genannten Greifmittel (21) aus Hacken oder Bügeln bestehen, die auf den Vertikalverschiebungsketten (22) eingeordnet sind.

4. Modulsystem (10) laut Anspruch 2, davon charakterisiert, daß die Distanz oder der Abstand (p) zwischen zwei nachfolgenden, anliegenden Zapfen (17) und/oder Bügeln (42) des horizontalen Förderers vom bewegenden Plattform (16; 23; 41) einen vorausbestimmten Wert hat.

5. Modulsystem (10) laut Anspruch 3, davon charakterisiert, daß die Distanz oder der Abstand (p₁) zwischen zwei Greifmitteln (21) des vertikalen Förderers (22) mit einem Vielfache oder einem Bruch der Distanz oder des Abstands (p) zwischen zwei folgenden Zapfen (17) oder Bügeln (42) des horizontalen Förderers (16; 23; 41) gleichwertig ist.

6. Modulsystem (10) laut einem der vorherigen Ansprüchen, davon charakterisiert, daß die genannten Führungen pantographierte Führungen (18; 19) sind, die an entsprechenden Enden mit Rädergetrieben zur Begleitung der Rädern (15) der beweglichen Plattformen (11) während ihrer Rückstrecke zum Startpunkt versehen sind.

7. Modulsystem (10) laut einem der vorherigen Ansprüche, davon charakterisiert, daß jede steigende und/oder absteigende Strecke mindestens zwei anliegende Stapel von bewegenden Plattformen enthält.

8. Modulsystem (10) laut einem der vorherigen Ansprüche, davon charakterisiert, daß jede Einheit geöffnet und/oder gechlossen und/or isoliert laut der Operationen, die im Inneren derselben Einheit erfolgen, ist.

9. Modulsystem (10) laut einem der Ansprüche vom 5 bis 8, davon charakterisiert, daß die absteigende Vertikalstrecke der bewegenden Plattformen innerhalb einer Einheit einen Abstand hat, der einem Vielfache oder einem Bruch des Abstands von der steigenden Strecke der Einheit entspricht.

10. Modulsystem (10) laut einem der vorherigen Ansprüche, davon charakterisiert, daß die Produktentlagung vom bewegenden Plattform auf automatische oder halbautomatische Art erfolgt.

11. Turmofen (10) für Bäckereiprodukte einem Modulsystem (10) enthaltend, daß für die Verschiebung der genannten Produkte innerhalb dieses Ofens sorgt. Laut einem der vorherigen Ansprüche, ist der Ofen (50) davon charakterisiert, daß er erste Heiz-und Lüftungsmittel (52) sowie auch zweite Mittel (53) zur Teilung des Ofenvolumen enthält, sodaß die Backzone des Ofens (50) mindestens zwei bestimmte Zonen mit verschiedenen Arbeitstemperaturen hat.

12. Ofen (50) laut Anspruch 11, davon charakterisiert, daß er mindestens eine Anfeuchtungs-oder Verdampfungszone bergwärts und/oder talwärts der Backzone enthält.

13. Ofen (50) laut Anspruch 12, davon charakterisiert, daß die Verdampfungszone das erste und/oder zweite Element der im Ofen vorgesehenen steigenden Zone interessiert.

14. Ofen (50) laut einem der Ansprüche vom 11 bis 13, davon charakterisiert, daß die zwei Zonen mit verschiedenen Temperaturen die steigende, beziehungsweise die absteigende Zone sind, die sich im Ofen (50) befinden.

15. Ofen (50) laut einem der Ansprüche vom 11 bis 14, davon charakterisiert, daß jede Backzone zu verschiedener Temperatur einen eigenen Brenner und ein eigenes Lüftungssystem enthält.

16. Ofen (50) laut Anspruch 11, davon charakterisiert, daß die inneren Trennungsmittel eine Schottwand (20) umfassen, die mit einer Oeffnung zur horizontalen Verschiebung der Stützelemente (51) der Bäckereiprodukte von der ersten zu der zweiten Backzone versehen ist.

17. Ofen (50) laut einem der Ansprüche vom 11 bis 16, davon charakterisiert, daß die steigende Zone eine höhere Temperatur hat als die der absteigenden Zone.

18. Ofen (50) laut einem der Ansprüche vom 11 bis 17, davon charakterisiert, daß er zusätzliche heizende Elemente (52) enthält, die mit den Stützelemente (51) der Bäckereiprodukte arbeiten können.

19. Ofen (50) laut Anspruch 18, davon charakterisiert, daß diese zusätzliche heizende Elemente (52) bergwärts der Backzone positioniert sind, so daß eine Vorbackenphase des Produktes erfolgen kann.

20. Ofen (50) laut Anspruch 18 oder 19, davon charakterisiert, daß die genannten heizenden Elemente (52) zu verschiedenen Temperaturen voneinander durch elektrische Widerstände, günstig sprechend Panzerelemente, erhitzt werden.

21. Ofen (50) laut Anspruch 20, davon charakterisiert, daß er eine einzige aus einem Brenner und einem Ventilator bestehende Wärmegruppe vorsieht.

22. Ofen (50) einem der Ansprüche vom 11 bis 20, davon charakterisiert, daß die Stützelemente (51) der Bäckereiprodukte eine Platte aus Stein oder anderem Material (z.B. Keramik oder Zement), die das Backen der genannten Produkte erhöhen, enthalten.

## Revendications

1. Système modulaire (10) pour le transfert de produits de four différents à l'intérieur d'une installation pour la manufacture et/ou la production de ces produits comprenant au moins une unité pourvue d'un transporteur à chaîne (16; 22; 23; 41) pour le déplacement vertical ou horizontal de châriots ou plateaux mobiles (11; 51) au moyen de moteurs adéquats (24; 25; 26; 43), lesdits plateaux mobiles (11; 51) étant pourvus de paires de roues (15) forcées à se déplacer sur des guides (18; 19; 44) associées au parcours desdites chaînes de transfert, **caractérisé en ce que** lesdits plateaux mobiles (11; 51) sont accouplés d'une façon amovible aux chaînes de translation horizontales (16; 23; 41) par des moyens d'accouplement (13; 14; 40) fixés auxdits plateaux mobiles, **en ce que** lesdits plateaux mobiles (11; 51) sont reliés de façon amovible aux chaînes de translation verticale (22) par des moyens de liaison (21) agissants sur lesdites roues (15), et **en ce que** les mouvements correspondants de translation horizontale et verticale sont coordonnés et synchronisés.

2. Système modulaire (10) selon la revendication 1, **caractérisé en ce que** lesdits moyens d'accouplement (13; 14; 40) sont fixés à des pivots (17) et/ou des étriers (42) positionnés sur lesdits convoyeurs à chaîne (16; 23; 41).

3. Système modulaire (10) selon la revendication 1, **caractérisé en ce que** lesdits moyens de liaison (21) comportent de crochets ou étriers placés sur lesdites chaînes de transfert vertical (22).

4. Système modulaire (10) selon la revendication 2, **caractérisé en ce que** la distance ou pas (p) entre deux pivots 17) et/ou étriers (42) consécutifs et adjacents du transporteur horizontal du plateau (16; 23; 41) a une valeur prédéterminée.

5. Système modulaire (10) selon la revendication 3, **caractérisé en ce que** la distance ou pas (p₁) entre deux moyens de liaison (21) du convoyeur vertical (22) équivaut à un multiple ou à un sous-multiple de la distance ou pas (p) entre deux pivots (17) ou étriers (42) suivants du convoyeur horizontal (16; 23; 41).

6. Système modulaire (10) selon l'une des revendications précédentes, **caractérisé en ce que** lesdites guides sont des guides pantographées (18; 19) et sont pourvues aux bouts d'engranages opportuns afin de favoriser la rotation des roues des plateaux mobiles (11) pendant leur parcours de retour au point de départ.

7. Système modulaire (10) selon l'une des revendications précédentes, **caractérisé en ce que** chaque parcours montant et/ou descendant comprend au moins deux piles de plateaux mobiles placées l'une à côté de l'autre.

8. Système modulaire (10) selon l'une des revendications précédentes, **caractérisé en ce que** chaque unité est ouverte et/ou fermée et/ou isolée selon les opérations effectuées à l'intérieur de l'unité elle-même.

9. Système modulaire (10) selon l'une des revendications 5 à 8, **caractérisé en ce que** le parcours vertical de descente des plateaux mobiles à l'intérieur d'une unité possède un pas égal à un multiple ou sous-multiple du pas du parcours montant de l'unité.

10. Système modulaire (10) selon l'une des revendications précédentes, **caractérisé en ce qu'**il est pourvu de moyens automatiques ou semi-automatiques pour le déchargement du produit du plateau mobile.

11. Four à tour (50) pour produits de four, comprenant un système modulaire (10) pour le transfert desdits produits de four à l'intérieur du four selon l'une des revendications précédentes, **caractérisé en ce que** ledit four (50) comprend des premiers moyens de chauffage et ventilation (52) ainsi que des deuxièmes moyens (53) subdivisant le volume du four afin que la zone de cuisson du four (50) comporte au moins deux zones distinctes ayant des températures de service différentes.

12. Four (50) selon la revendication 11, **caractérisé en ce qu'**il comprend au moins une zone d'humidification ou vaporisation en amont et/ou en aval de la zone de cuisson.

13. Four (50) selon la revendication 12, **caractérisé en ce que** la zone de vaporisation intéresse le premier et/ou le deuxième élément de la zone à mouvement montant prévue à l'intérieur du four (50).

14. Four (50) selon l'une des revendications 11 à 13, **caractérisé en ce que** les deux zones à températures différentes sont respectivement la zone montante et celle descendante qui se trouvent à l'intérieur du four (50).

15. Four (50) selon l'une des revendications 11 à 14, **caractérisé en ce que** chaque zone de cuisson à température différenciée comprend son brûleur et son système de ventilation.

16. Four (50) selon la revendication 11, **caractérisé en ce que** les moyens de subdivision intérieurs comprendent une cloison (53) pourvue d'une ouverture permettant la translation horizontale des éléments (51) qui soutiennent les produits de four de la première à la deuxième zone de cuisson.

17. Four (50) selon l'une des revendications 11 à 16, **caractérisé en ce que** la zone montante a une température supérieure à celle de la zone descendante.

18. Four (50) selon l'une des revendications 11 à 17, **caractérisé en ce qu'**il comprend des éléments de chauffage additionnels (52) à même de coopérer avec les éléments (51) supportant le produits de four.

19. Four (50) selon la revendication 18, **caractérisé en ce que** lesdits éléments de chauffage (52) sont positionnés en amont de la zone de cuisson en effectuant ainsi une phase de pré-cuisson du produit.

20. Four (50) selon l'une des revendications 18 ou 19, **caractérisé en ce que** dits éléments de chauffage (52) sont chauffés à températures différentes l'un de l'autre en utilisant des résistances électriques, avantageusement des résistances blindées.

21. Four (50) selon la revendication 20, **caractérisé en ce qu'**il comporte un seul groupe thermique se composant d'un brûleur et d'un ventilateur.

22. Four (50) selon l'une des revendications 11 à 20, **caractérisé en ce que** les éléments de soutien (51) contenant les produits de four comprennent une dalle en pierre ou d'autre matériel, par example céramique ou ciment, afin d'augmenter la cuisson desdits produits de four.
